# EUROPÄISCHE PATENTANMELDUNG

(11) **EP 3 006 139 A1**
(43) Veröffentlichungstag der Anmeldung: **13.04.2016**
(21) Anmeldenummer: 15002691.2
(22) Anmeldetag: 17.09.2015
(51) Int. Cl.: B22F 3/10, B22F 3/105

(54) **VERFAHREN ZUM SCHICHTWEISEN HERSTELLEN EINES METALLISCHEN WERKSTÜCKS DURCH LASERUNTERSTÜTZTE ADDITIVE FERTIGUNG**

(30) Priorität: 09.10.2014 EP 14003475
(71) Anmelder: Linde Aktiengesellschaft, 80331 München (DE)
(72) Erfinder: Miklos, Ernst, 85551 Kirchheim (DE); Fieret, Jim, Bell Hill, Hook Norton OX15 5PS (GB)
(74) Vertreter: Gellner, Bernd

(57) **Zusammenfassung**

Es wird ein Verfahren zum schichtweisen Herstellen eines metallischen Werkstücks durch additive Fertigung vorgeschlagen, bei dem metallurgische Schichten des Werkstücks erzeugt werden, indem für jede metallurgische Schicht pulverförmig metallischer Werkstoff bereitgestellt und mit einem Laserstrahl beaufschlagt wird, wobei der jeweils mit dem Laserstrahl beaufschlagten Schicht des pulverförmigen metallischen Werkstoffs ein Prozessgas zugeführt wird. Es ist vorgesehen, dass das Prozessgas für unterschiedliche metallurgische Schichten des Werkstücks mit unterschiedlicher Gaszusammensetzung verwendet wird und dass für jeweils benachbarte metallurgische Schichten, für die das Prozessgas mit unterschiedlicher Gaszusammensetzung verwendet wird, die Gaszusammensetzung jeweils derart gewählt wird, dass durch Gaszusammensetzung beeinflusste metallurgische Eigenschaften der jeweils benachbarten metallurgischen Schichten vorgegebene Unterschiede aufweisen.

## Beschreibung

Die Erfindung betrifft ein Verfahren zum schichtweisen Herstellen eines metallischen Werkstücks durch additive Fertigung, bei dem metallurgische Schichten des Werkstücks erzeugt werden, indem für jede metallurgische Schicht ein pulverförmiger metallischer Werkstoff bereitgestellt und mit einem Laserstrahl beaufschlagt wird, wobei der jeweils mit dem Laserstrahl beaufschlagten Schicht des pulverförmigen metallischen Werkstoffs ein Prozessgas über eine Düse zugeführt wird, wobei das Prozessgas für unterschiedliche metallurgische Schichten des Werkstücks mit unterschiedlicher Gaszusammensetzung verwendet wird und dass für jeweils benachbarte metallurgische Schichten, für die das Prozessgas mit unterschiedlicher Gaszusammensetzung verwendet wird, die Gaszusammensetzung jeweils derart gewählt wird, dass durch die Gaszusammensetzung beeinflusste metallurgische Eigenschaften der jeweils benachbarten metallurgischen Schichten vorgegebene Unterschiede aufweisen.

### Stand der Technik

Im Zuge generativer bzw. additiver Fertigungsverfahren kann ein dreidimensionaler Gegenstand bzw. ein Werkstück schichtweise aus einem metallischen Werkstoff hergestellt werden. Das hergestellte Werkstück setzt sich aus unterschiedlichen metallurgischen Schichten zusammen, die im Zuge des additiven Fertigungsverfahrens einzeln nacheinander erzeugt werden. Für jede dieser metallurgischen Schichten des Werkstücks kann der metallische Werkstoff beispielsweise in Pulverform aufgebracht und verfestigt werden. Zu diesem Zweck kann der aufgebrachte Werkstoff beispielsweise mit einem Laser- und/oder Elektronenstrahl beaufschlagt werden. Der Werkstoff kann auf diese Weise beispielsweise einem Sinter- oder Schmelzprozess unterzogen werden, wodurch der Werkstoff verfestigt wird. Nach Erzeugen einer metallurgischen Schicht kann die nächste Schicht auf analoge Weise erzeugt werden.

Je nach Anwendungsgebiet werden additive Fertigungsverfahren auch als Rapid Prototyping bezeichnet. Im Zuge eines Rapid Prototypings können beispielsweise Werkzeuge, Werkstücke oder Bauelemente für unterschiedliche Zwecke hergestellt werden. Additive Fertigungsverfahren können in unterschiedlichen Gebieten Anwendung finden, beispielsweise in der Architektur, im Maschinenbau, in der Luft- und Raumfahrt, in der Medizintechnik oder in der Automobilindustrie.

Ein bekanntes additives Fertigungsverfahren ist die hier mit dem englischen Fachbegriff bezeichnete sogenannte Additive Laser Deposition. Hierbei wird der metallische Werkstoff pulverförmig in ein Schmelzbad eingebracht, welches durch einen Laserstrahl erzeugt wird. Der metallische Werkstoff wird dabei über eine Düse oder über Öffnungen konzentrisch zum Laserstrahl zugeführt, zumeist mit Hilfe eines Trägergases. Zudem wird zumeist ein weiteres Gas, das sogenannte Prozessgas, über eine Düse zugeführt. Diese Düse ist zumeist konzentrisch zum Laserstrahl angeordnet, der Laserstrahl ist somit von dem Prozessgas umgeben. Die Additive Laser Deposition wird daher auch als Düsentechnik bezeichnet. Die verwendete Düse für das Prozessgas kann beispielsweise ringförmig um den Laserstrahl angeordnete Öffnungen zum Austritt des Pulvers und des Trägergases aufweisen.

Die vorliegende Erfindung eignet sich für alle Verfahren zur laserunterstützten additiven Fertigung unter Verwendung eines metallischen Werkstoffs, der über eine Düse bereitgestellt und mit einem Laserstrahl beaufschlagt wird.

Das zu fertigende Werkstück kann beispielsweise auf einer Trägerplatte oder einem Lineartisch angeordnet sein. Die Trägerplatte bzw. der Lineartisch kann insbesondere in einer Ebene senkrecht zu dem Laserstrahl verschoben werden, um die jeweiligen metallurgischen Schichten zu erzeugen. Nach dem Erzeugen einer metallurgischen Schicht kann der Laserstrahl bzw. ein entsprechender Laserkopf bewegt werden, und die nächste Schicht kann auf analoge Weise erzeugt werden.

Der pulverförmige Werkstoff kann beispielsweise durch Gravitation in Richtung des Schmelzbads transportiert oder, wie erwähnt, in einen Strom eines geeigneten Trägergases eingebracht werden. Ferner kann ein weiterer Gasvorhang eines sogenannten Schleiergases erzeugt werden, indem ein zweckmäßiges Gas oder Gasgemisch in Richtung des Schmelzbads geführt wird. Zumeist wird dabei ein Inertgas (Argon, Helium) verwendet, welches keine Reaktion mit dem metallischen Werkstoff eingeht. Durch den Gasvorhang wird das herzustellende Werkstück bzw. das Schmelzbad abgeschirmt, beispielsweise vor anderen Gasen, und es kann verhindert werden, dass der aufgebrachte metallische Werkstoff verunreinigt oder ungewollt in seinen Eigenschaften beeinflusst wird.

Bei additiven Fertigungsverfahren der erläuterten Art besteht oftmals die Gefahr, dass in dem Werkstück sogenannte metallurgische Kerben entstehen. Als metallurgische Kerbe wird ein schlagartiger, harter Übergang zwischen Bereichen bzw. Schichten mit unterschiedlichen metallurgischen Eigenschaften bezeichnet. Die metallurgischen Eigenschaften des Werkstücks ändern sich bei derartigen metallurgischen Kerben demgemäß schlagartig. Diese Bereiche des Werkstücks können sich bei Belastung gegebenenfalls sehr unterschiedlich verhalten, was zu hohen mechanischen Spannungen bzw. Ungleichmäßigkeiten in dem Werkstück führen kann. An derartigen metallurgischen Kerben können daher sehr schnell Bruchstellen bzw. Defekte des Werkstücks entstehen.

Es ist daher wünschenswert, ein entsprechendes Verfahren dahingehend zu verbessern, dass ein Werkstück ohne metallurgische Kerben hergestellt werden kann.

### Offenbarung der Erfindung

Diese Aufgabe wird durch ein Verfahren zum schichtweisen Herstellen eines Werkstücks durch laserunterstützte additive Fertigung, insbesondere durch Additive Laser Deposition, mit den Merkmalen des Patentanspruchs 1 gelöst. Vorteilhafte Ausgestaltungen sind Gegenstand der jeweiligen Unteransprüche sowie der nachfolgenden Beschreibung.

Erfindungsgemäß wird als Prozessgas ein Gasgemisch bestehend aus wenigstens einem Inertgas als Gaskomponente und einer Gaskomponente ausgewählt aus der Gruppe von Helium und Wasserstoff oder Mischungen davon eingesetzt.

Als Inertgas kommt beispielsweise Argon zum Einsatz.

Dabei basiert der Vorteil der Zumischung von Helium in das Prozessgas auf der Eigenschaft des Heliums, eine graduelle Veränderung der Wärmeleitfähigkeit, des Wärmeübergangs und der Viskosität des Prozessgases an der Trennfläche zum geschmolzenen Metall zu bewirken. Diese Veränderungen sind über den Heliumanteil steuerbar. Gemäß der vorliegenden Erfindung hat sich ein Heliumanteil ausgewählt aus dem Bereich von 1 bis 99 vol.-% in einem als übrigen Bestandteil aus einem Inertgas, insbesondere aus Argon, bestehenden Gasgemisch als Prozessgas als besonders vorteilhaft erwiesen. Dadurch können unterschiedliche Abkühlgeschwindigkeiten, Gefügeveränderungen und ein verschiedener Materialverzug erreicht werden. Über eine Variation in der Helium-Zumischung, also über unterschiedliche Heliumgehalte im Prozessgas, können somit schichtweise unterschiedliche Eigenschaften in einem schichtweise aufgebauten Werkstück erzeugt werden.

Bei der bereits erwähnten Alternative, als Prozessgas ein Gasgemisch bestehend aus wenigstens einem Inertgas, insbesondere Argon, als Gaskomponente und Wasserstoff als weitere Gaskomponente einzusetzen, gelten im Hinblick auf die Wärmeleitfähigkeit und den Wärmeübergang ebenfalls die für Helium vorstehend dargelegten Vorteile. Zusätzlich ergibt sich beim Einsatz von Wasserstoff im Prozessgas eine besonders vorteilhafte Sauerstoffabbindung. Dazu sei Folgendes erläutert: Viele der bei additiven Fertigungsverfahren eingesetzten (Metall)pulver enthalten eine gewisse Menge an Sauerstoff, die beim Aufschmelzen des Pulverkorns freigesetzt wird. Durch den Wasserstoff, der über das wasserstoffhaltige erfindungsgemäße Prozessgas zugeführt wird, kann dieser freiwerdende Sauerstoff abgebunden werden. Durch Variation des Wasserstoffanteils im Prozessgas kann man den Restsauerstoffgehalt einer jeden Schicht des schichtweise aufgebauten Werkstücks gezielt festlegen und das Werkstück entsprechend dieser Festlegung fertigen.

Gemäß einer besonders vorteilhaften Weiterbildung der vorliegenden Erfindung hat sich ein Wasserstoffanteil ausgewählt aus dem Bereich von 0,01 bis 50 vol.-% in einem als übrigen Bestandteil aus einem Inertgas, insbesondere aus Argon, bestehenden Gasgemisch als Prozessgas als besonders vorteilhaft erwiesen.

Die ebenfalls bereits erwähnten Alternative, als Prozessgas ein Gasgemisch bestehend aus wenigstens einem Inertgas, insbesondere Argon, als Gaskomponente und einer Gaskomponente, die aus einer Mischung von Helium und Wasserstoff besteht, einzusetzen, hat sich ebenfalls als vorteilhaft erwiesen.

Gemäß einer Weiterbildung der Erfindung, ist es auch möglich Helium als Inertgas zu betrachten und ein Prozessgas einzusetzen, das aus Helium und Wasserstoff besteht.

Das hergestellte Werkstück setzt sich aus unterschiedlichen metallurgischen Schichten zusammen, die einzeln nacheinander erzeugt werden. Die einzelnen metallurgischen Schichten des Werkstücks werden jeweils erzeugt, indem für jede metallurgische Schicht eine Schicht eines pulverförmigen metallischen Werkstoffs bereitgestellt und mit einem Laserstrahl beaufschlagt wird. Der metallische Werkstoff wird bei dem Verfahren, wie bereits erwähnt, beispielsweise pulverförmig in ein Schmelzbad eingebracht, welches unter Verwendung des Laserstrahls erzeugt wird. Der pulverförmige metallische Werkstoff wird insbesondere mit Hilfe eines Trägergases dem Schmelzbad zugeführt. Hierbei wird der pulverförmige metallische Werkstoff (gegebenenfalls zusammen mit dem Trägergas) über eine Düse oder über Öffnungen konzentrisch zum Laserstrahl zugeführt.

Die einzelnen metallurgischen Schichten haben insbesondere eine Dicke im Bereich von 20 µm bis 100 µm. Das herzustellende Werkstück ist insbesondere auf einer Trägerplatte oder einem Lineartisch angeordnet, welcher in einer Ebene senkrecht zu dem Laserstrahl verschoben werden kann. Nach Erzeugen einer metallurgischen Schicht wird ein Laserstrahl bzw. ein entsprechender Laserkopf, welcher den Laserstrahl erzeugt, um die Dicke dieser erzeugten Schicht in vertikaler Richtung bewegt. Die nächste Schicht wird auf analoge Weise erzeugt.

Die Trägerplatte bzw. der Lineartisch kann insbesondere von einer Steuereinheit gesteuert werden. In dieser Steuereinheit können Daten wie beispielsweise CAD-Daten hinterlegt sein, welche das herzustellende Werkstück charakterisieren. Die Steuereinheit kann die Trägerplatte bzw. den Lineartisch basierend auf diesen Daten ansteuern und relativ zum Laserstrahl verfahren.

Wie grundsätzlich bekannt, wird im Rahmen des erfindungsgemäßen Verfahrens auch der jeweils mit dem Laserstrahl beaufschlagten Schicht des pulverförmigen metallischen Werkstoffs ein Prozessgas über eine Düse zugeführt. Diese Düse ist insbesondere konzentrisch zum Laserstrahl angeordnet, der Laserstrahl ist von dem Prozessgas umgeben. Prozessgas, Trägergas und pulverförmiger metallischer Werkstoff können insbesondere über dieselbe Düse zugeführt werden. Alternativ kann auch das Prozessgas über eine erste Düse und das Trägergas und der pulverförmige metallische Werkstoff über eine zweite Düse zugeführt werden. Weiterhin kann das Prozessgas auch über eine Düse zugeführt werden, welche ringförmig um den Laserstrahl angeordnete Öffnungen zum Austritt des pulverförmigen metallischen Werkstoffs und des Trägergases aufweist. Weiter insbesondere kann ein weiterer Gasvorhang eines sogenannten Schleiergases durch Zufuhr eines zweckmäßigen Gases oder Gasgemisches in Richtung des Schmelzbads erzeugt werden.

Die Erfindung zeichnet sich nun dadurch aus, dass das Prozessgas für unterschiedliche metallurgische Schichten des Werkstücks mit unterschiedlicher Gaszusammensetzung verwendet wird, und dass für jeweils benachbarte metallurgische Schichten, für die das Prozessgas mit unterschiedlicher Gaszusammensetzung verwendet wird, die Gaszusammensetzung jeweils derart gewählt wird, dass durch die Gaszusammensetzung beeinflusste metallurgische Eigenschaften der jeweils benachbarten metallurgischen Schichten vorgegebene Unterschiede aufweisen.

Für jede oder jeweils eine vorgegebene Zahl der metallurgischen Schichten des Werkstücks kann also eine Gaszusammensetzung verändert werden. Durch die jeweilige Gaszusammensetzung des Prozessgases werden metallurgische Eigenschaften der jeweiligen metallurgischen Schicht(en) des Werkstücks beeinflusst. Die Gaszusammensetzung für diese metallurgische(n) Schicht(en) wird vorteilhafterweise jeweils derart gewählt, dass sich metallurgische Eigenschaften von einer oder mehreren jeweils benachbarten metallurgischen Schichten des Werkstücks jeweils durch vorgegebene Kriterien unterscheiden.

Die Gaszusammensetzung wird insbesondere derart verändert, dass sich metallurgische Eigenschaften benachbarter metallurgischer Schichten des Werkstücks nicht schlagartig verändern, sondern vorteilhafterweise insgesamt kontinuierlich bzw. graduell, und dass weiter insbesondere keine "Sprünge" bzw. keine sprunghaften Änderungen in den metallurgischen Eigenschaften jeweils benachbarter metallurgischer Schichten auftreten.

### Vorteile der Erfindung

Ohne Beschränkung der Allgemeinheit wird nachfolgend zu Zwecken der Erläuterung die Erstreckungsrichtung erzeugter (flacher) Schichten als "Querausdehnung" des Werkstücks und die Richtung senkrecht dazu, also die Richtung, in der Schicht für Schicht aufgetragen wird, als "Längsausdehnung" des Werkstücks bezeichnet.

Durch die Erfindung wird es ermöglicht, dass in dem Werkstück keine metallurgischen Kerben entstehen. Entlang der gesamten Längsausdehnung des Werkstücks ändern sich die metallurgischen Eigenschaften nach vorgegebenen Kriterien. Somit wird insbesondere ein sanfter, fließender Übergang zwischen den metallurgischen Eigenschaften jeweils benachbarter metallurgischer Schichten gewährleistet. Die metallurgischen Eigenschaften jeweils benachbarter metallurgischer Schichten sind somit aufeinander abgestimmt bzw. aneinander angepasst, insbesondere über die komplette Längsausdehnung des Werkstücks.

Das gefertigte Werkstück weist somit eine anisotrope Verteilung von metallurgischen Eigenschaften auf. Jede metallurgische Schicht an sich weist zwar jeweils konstante, isotrope metallurgische Eigenschaften auf, so dass das gefertigte Werkstück auch entlang seiner Querausdehnung jeweils konstante, d.h. isotrope metallurgische Eigenschaften aufweist. Entlang seiner Längsausdehnung ändern sich die metallurgischen Eigenschaften jedoch und weisen eine anisotrope Verteilung auf.

Dennoch wird durch die Erfindung gewährleistet, dass die metallurgischen Eigenschaften entlang der Längsausdehnung des Werkstücks vorgegebenen Gesetzmäßigkeiten folgen und nicht willkürlich verteilt sind. Insbesondere wird durch die Erfindung gewährleistet, dass keine Sprünge bzw. sprunghaften Änderungen der metallurgischen Eigenschaften entlang der Längsausdehnung auftreten.

Je nach Wahl der Gaszusammensetzung reagiert der aufgebrachte metallische Werkstoff unterschiedlich mit dem Prozessgas und unterschiedliche metallurgische Eigenschaften können erzielt werden. Insbesondere wird das Prozessgas dabei in Form einer zweckmäßigen Prozessgasströmung in Richtung des aufgebrachten metallischen Werkstoffs zugeführt. Das Prozessgas wird somit direkt auf diejenigen Stellen des herzustellenden Werkstücks zugeführt, an welcher die metallurgischen Eigenschaften entsprechend verändert werden sollen.

Vorteilhafterweise wird die Gaszusammensetzung des verwendeten Prozessgases für jede der metallurgischen Schichten jeweils derart gewählt, dass eine Änderung der metallurgischen Eigenschaften entlang einer Ausbreitungsrichtung des Werkstücks, insbesondere entlang seiner Längsausdehnung, einem vorgegebenem Gradienten, einem vorgegebenem Profil und/oder einer vorgegebenen Verteilung folgt. Durch diesen Gradienten, dieses Profil bzw. diese Verteilung wird insbesondere gewährleistet, dass keine metallurgischen Kerben in dem Werkstück auftreten.

Vorzugsweise wird die Gaszusammensetzung für jede oder mehrere der metallurgischen Schichten jeweils derart gewählt, dass die metallurgischen Eigenschaften der jeweiligen metallurgischen Schicht(en) jeweils auf vorgegebene Werte eingestellt werden. Durch die Wahl der Gaszusammensetzung werden somit die metallurgischen Eigenschaften jeder metallurgischen Schicht gezielt beeinflusst. Somit können die metallurgischen Eigenschaften benachbarter metallurgischer Schichten besonders einfach aneinander angepasst bzw. aufeinander abgestimmt werden. Insbesondere hängt der eingestellte Wert einer metallurgischen Eigenschaft einer speziellen metallurgischen Schicht jeweils von dem eingestellten Wert dieser metallurgischen Eigenschaft der jeweils benachbarten metallurgischen Schicht ab.

Bevorzugt wird die Gaszusammensetzung für jede oder mehrere der metallurgischen Schicht(en) jeweils derart gewählt, dass die Werte der metallurgischen Eigenschaften jeweils benachbarter metallurgischer Schichten jeweils maximal um einen vorgegebenen Schwellwert voneinander abweichen. Dieser Schwellwert wird insbesondere derart gewählt, dass zwischen den jeweils benachbarten metallurgischen Schichten keine metallurgische Kerbe entsteht. Vorzugsweise beträgt dieser Schwellwert 5%, weiter insbesondere 2,5%, weiter insbesondere 1% einer oder mehrerer metallurgischer Eigenschaften (siehe unten zu hierbei verwendbaren metallurgischen Eigenschaften).

Durch zweckmäßige Wahl des Schwellwerts kann insbesondere ein sanfter, fließender Übergang zwischen den metallurgischen Eigenschaften jeweils benachbarter metallurgischer Schichten gewährleistet werden. Weiterhin wird durch zweckmäßige Wahl des Schwellwerts gewährleistet, dass die Änderung der metallurgischen Eigenschaften entlang der Ausbreitungsrichtung bzw. Längsachse des Werkstücks, dem entsprechenden Gradienten, Profil bzw. der entsprechenden Verteilung folgt.

Bevorzugt wird der pulverförmige metallische Werkstoff mit Hilfe eines Trägergases bereitgestellt und/oder ein Gasvorhang aus einem Schleiergas wird erzeugt. Weiter bevorzugt werden das Prozessgas und das Trägergas und/oder das Schleiergas für unterschiedliche metallurgische Schichten des Werkstücks mit jeweils unterschiedlicher Gaszusammensetzung verwendet. Die Gaszusammensetzungen des Prozessgases und des Trägergases und/oder des Schleiergases werden bevorzugt in Abhängigkeit voneinander gewählt, insbesondere derart, dass durch die Gaszusammensetzungen beeinflusste metallurgische Eigenschaften der jeweils benachbarten metallurgischen Schichten die vorgegebenen Unterschiede aufweisen.

Die Gaszusammensetzungen des Prozessgases, des Trägergases und/oder des Schleiergases werden somit insbesondere derart aufeinander abgestimmt, dass die gewünschten metallurgischen Eigenschaften der einzelnen metallurgischen Schichten erzielt werden. Die Gaszusammensetzung des Prozessgases kann insbesondere unterschiedlich zu den Gaszusammensetzungen des Trägergases und des Schleiergases sein. Alternativ kann auch für Prozessgas, Trägergas und Schleiergas jeweils dieselbe Gaszusammensetzung verwendet werden.

Ob für Prozessgas, Trägergas und Schleiergas jeweils unterschiedliche oder dieselbe Gaszusammensetzung verwendet wird, hängt insbesondere von unterschiedlichen Eigenschaften des Fertigungsprozesses ab, beispielsweise von der Prozessgeschwindigkeit, von der eingebrachten Energie, von dem Volumen des erhitzten Materials und/oder von der Reaktivität des metallischen Werkstoffs.

Wie weiter oben erläutert, können Trägergas, pulverförmiger metallischer Werkstoff und Prozessgas über eine gemeinsame Düse koaxial zu dem Laserstrahl eingebracht werden. Durch eine derartige kombinierte Zufuhr des Trägergases und des Prozessgases können auf einfache, aufwandsarme und kostengünstige Weise die metallurgischen Eigenschaften der kompletten jeweiligen metallurgischen Schicht entsprechend verändert werden.

Bevorzugt wird durch die jeweilige Gaszusammensetzung des Prozessgases bzw. durch die in Abhängigkeit voneinander gewählten Gaszusammensetzungen des Prozessgases, des Trägergases und/oder des Schleiergases eine Verbesserung von bestimmten (positiven) metallurgischen Eigenschaften des Werkstücks erzielt. Weiterhin können dadurch negative, unerwünschte metallurgische Eigenschaften oder Effekte des Werkstücks verringert bzw. vermieden werden.

Vorzugsweise wird für die metallurgischen Schichten die Gaszusammensetzung des Prozessgases jeweils derart gewählt, dass die metallurgischen Eigenschaften der jeweiligen metallurgischen Schichten beeinflusst werden. Als Trägergas und/oder als Schleiergas wird für die metallurgischen Schichten hingegen vorzugsweise jeweils ein reines Inertgas oder ein Gasgemisch mit wenigstens einem Inertgas als Gaskomponente zugeführt.

Bevorzugt werden durch die jeweilige Gaszusammensetzung(en) eine Kriechfestigkeit, eine Härte, eine Steifigkeit, eine thermische Leitfähigkeit, eine elektrische Leitfähigkeit, ein Schmelzpunkt, eine Korrosionsbeständigkeit, eine Abnutzungs- bzw. Verschleißbeständigkeit, eine Duktilität, elektromagnetische Eigenschaften und/oder eine Porosität als metallurgische Eigenschaften der jeweiligen metallurgischen Schichten des Werkstücks verändert.

Bevorzugt wird das Werkstück aus einem niedrig schmelzenden Metall hergestellt. Zu diesem Zweck wird für jede metallurgische Schicht jeweils das niedrig schmelzende Metall als metallischer Werkstoff bereitgestellt. Als niedrig schmelzende Metalle werden hierbei Metalle angesehen, die einen Schmelzpunkt von maximal 1500 °C aufweisen, bevorzugt von maximal 1200 °C, weiter bevorzugt von maximal 1000 °C und mindestens 500 °C. Beispielsweise werden Aluminium, Zinn, Blei, Zink und/oder Silber bzw. entsprechende Mischungen bzw. Legierungen als niedrig schmelzende Metalle verwendet. Entsprechende Legierungen können auch aus unterschiedlichen metallischen Werkstoffen erzeugt werden, indem unterschiedliche Komponentengemische eingebracht werden.

Weiter bevorzugt wird das Werkstück nicht aus einem Refraktärmetall bzw. einem hoch schmelzenden Metall hergestellt. Demgemäß wird bevorzugt kein Refraktärmetall bzw. kein hoch schmelzendes Metall als metallischer Werkstoff aufgeschmolzen. Refraktärmetalle bzw. hoch schmelzende Metalle weisen insbesondere einen Schmelzpunkt von mindestens 1500 °C auf. Bei derartig hohen Temperaturen verhalten sich Gase anders, als bei vergleichsweise niedrigen Temperaturen von insbesondere maximal 1500 °C. Eigenschaften von Gasen sowie ablaufende Reaktionen sind bei derartig hohen und derartig niedrigen Temperaturen deutlich unterschiedlich. Insbesondere gelten bei den hohen Temperaturen andere Gesetze der Thermodynamik als bei derartig niedrigen Temperaturen. Bei hohen Temperaturen ist es insbesondere sehr viel aufwendiger, spezielle metallurgische Eigenschaften der metallurgischen Schichten zu erzeugen, als bei niedrigen Temperaturen. Es ist jedoch möglich, Refraktärmetalle oder andere Komponenten, beispielsweise zur Herstellung von besonders abriebfesten Werkstücken, in eine Matrix aus niedrig schmelzenden Metallen einzubetten, beispielsweise um Verbundmaterialien zu schaffen.

Insgesamt umfasst das Werkstück damit jedoch bevorzugt ein niedrig schmelzendes Metall und das selektive Laserschmelzen wird bevorzugt bei niedrigen Temperaturen von maximal 1500 °C, weiter bevorzugt von maximal 1200 °C, weiter bevorzugt von maximal 1000 °C, durchgeführt. Bei derartig niedrigen Temperaturen kann das Werkstück einfach, aufwandsarm und kostengünstig hergestellt werden.

Gemäß einer bevorzugten Ausgestaltung wird für unterschiedliche metallurgische Schichten unterschiedlicher pulverförmiger metallischer Werkstoff bereitgestellt. Das Werkstück kann somit insbesondere aus unterschiedlichen Werkstoffen (Legierungen) aufgebaut werden. Der metallische Werkstoff bzw. die Zusammensetzung des verwendeten metallischen Pulvers kann zweckmäßig von einer metallurgischen Schicht zur nächsten metallurgischen Schicht verändert werden.

Falls nur oder zumindest im Wesentlichen inertes Gas bzw. inerte Gase als Prozessgas, Trägergas und Schleiergas zugeführt werden, kann der Wechsel des metallischen Werkstoffs insbesondere ohne Veränderung dieser jeweiligen Gaszusammensetzungen durchgeführt werden.

Vorteilhafterweise wird die Gaszusammensetzung des Prozessgases in Abhängigkeit von dem metallischen Werkstoff der jeweiligen metallurgische Schicht jeweils derart gewählt, dass durch die Gaszusammensetzung die metallurgischen Eigenschaften der jeweiligen metallurgischen Schicht beeinflusst werden. Die Gaszusammensetzung des Prozessgases wird somit an den metallischen Werkstoff der einzelnen metallurgischen Schichten angepasst. Auf diese Weise können in das Werkstück unterschiedliche Schichtbereiche aus unterschiedlichen Metallen eingearbeitet werden.

Beispielsweise kann zunächst eine bestimmte Anzahl von metallurgischen Schichten des Werkstücks jeweils aus einem austenitischen, hochlegierten Stahl gefertigt werden. Beispielsweise kann für diese metallurgischen Schichten aus austenitischem, hochlegiertem Stahl jeweils eine Gaszusammensetzung aus Argon und Wasserstoff als Prozessgas zugeführt werden. Durch derartige Prozessgase kann insbesondere eine Oxidation der einzelnen metallurgischen Schichten auf ein Minimum reduziert werden und eine Korrosionsbeständigkeit der einzelnen metallurgischen Schichten kann erhöht bzw. jeweils auf einen bestimmten Wert eingestellt werden.

Nach einer spezifischen metallurgischen Schicht wird der metallische Werkstoff verändert. Nach dieser spezifischen metallurgischen Schicht wird eine bestimmte zweite Anzahl von metallurgischen Schichten des Werkstücks beispielsweise jeweils aus einer ferritischen Chromlegierung gefertigt. Da für einen derartigen Werkstoff eine Gaszusammensetzung mit Wasserstoff schädlich wäre, wird in Abhängigkeit dieses metallischen Werkstoffs die Gaszusammensetzung des Prozessgases verändert. Als Prozessgas wird daher für diese zweite Anzahl von metallurgischen Schichten jeweils eine wasserstofffreie Gaszusammensetzung als Prozessgas verwendet, beispielsweise Argon oder ein Argon-Helium-Gemisch.

Beispielsweise können durch Verwendung von Wasserstoff in der Gaszusammensetzung spröde, brüchige Schichten des Werkstücks erzeugt werden. Auf diese Weise können beispielsweise Sollbruchstellen in dem Werkstück erzeugt werden.

## Patentansprüche

1. Verfahren zum schichtweisen Herstellen eines metallischen Werkstücks durch additive Fertigung, bei dem metallurgische Schichten des Werkstücks erzeugt werden, indem für jede metallurgische Schicht ein pulverförmiger metallischer Werkstoff bereitgestellt und mit einem Laserstrahl beaufschlagt wird, wobei der jeweils mit dem Laserstrahl beaufschlagten Schicht des pulverförmigen metallischen Werkstoffs ein Prozessgas über eine Düse zugeführt wird, wobei das Prozessgas für unterschiedliche metallurgische Schichten des Werkstücks mit unterschiedlicher Gaszusammensetzung verwendet wird und dass für jeweils benachbarte metallurgische Schichten, für die das Prozessgas mit unterschiedlicher Gaszusammensetzung verwendet wird, die Gaszusammensetzung jeweils derart gewählt wird, dass durch die Gaszusammensetzung beeinflusste metallurgische Eigenschaften der jeweils benachbarten metallurgischen Schichten vorgegebene Unterschiede aufweisen, **dadurch gekennzeichnet, dass** als Prozessgas ein Gasgemisch bestehend aus wenigstens einem Inertgas als Gaskomponente und einer Gaskomponente ausgewählt aus der Gruppe von Helium und Wasserstoff oder Mischungen davon eingesetzt wird.

2. Verfahren nach Anspruch 1, wobei die Gaszusammensetzung des Prozessgases jeweils derart gewählt wird, dass eine Änderung der metallurgischen Eigenschaften des Werkstücks senkrecht zu einer Erstreckung der metallurgischen Schichten einem vorgegebenem Gradienten, einem vorgegebenen Profil und/oder einer vorgegebenen Verteilung folgt.

3. Verfahren nach Anspruch 1 oder 2, wobei die Gaszusammensetzung des Prozessgases jeweils derart gewählt wird, dass die Werte der metallurgischen Eigenschaften der benachbarten metallurgische Schichten, für die das Prozessgas mit unterschiedlicher Gaszusammensetzung verwendet wird, jeweils maximal um einen vorgegebenen Schwellwert voneinander abweichen.

4. Verfahren nach einem der vorstehenden Ansprüche, wobei die Düse, über die das Prozessgas zugeführt wird, konzentrisch zum Laserstrahl angeordnet ist oder der Laserstrahl aufgeteilt und das Prozessgas im Zentrum zugeführt und von den aufgeteilten Laserstrahlen außen umgeben wird.

5. Verfahren nach einem der vorstehenden Ansprüche, wobei der pulverförmige metallische Werkstoff mit Hilfe eines Trägergases bereitgestellt wird und/oder wobei ein Gasvorhang aus einem Schleiergas erzeugt wird.

6. Verfahren nach Anspruch 5, wobei das Prozessgas und das Trägergas und/oder das Schleiergas für unterschiedliche metallurgische Schichten des Werkstücks mit jeweils unterschiedlicher Gaszusammensetzung verwendet werden und für jeweils benachbarte metallurgische Schichten, für die das Prozessgas und das Trägergas und/oder das Schleiergas mit unterschiedlicher Gaszusammensetzung verwendet werden, die Gaszusammensetzungen des Prozessgases, des Trägergases und/oder des Schleiergases derart in Abhängigkeit voneinander gewählt werden, dass durch die Gaszusammensetzungen beeinflusste metallurgische Eigenschaften der jeweils benachbarten metallurgischen Schichten die vorgegebenen Unterschiede aufweisen.

7. Verfahren nach Anspruch 5 oder 6, wobei für die metallurgischen Schichten die Gaszusammensetzung des Prozessgases jeweils derart gewählt wird, dass durch die Gaszusammensetzung die metallurgischen Eigenschaften der jeweiligen metallurgischen Schichten beeinflusst werden und wobei für die metallurgischen Schichten als Trägergas und/oder als Schleiergas jeweils ein reines Inertgas oder ein Gasgemisch mit wenigstens einem Inertgas als Gaskomponente zugeführt wird.

8. Verfahren nach einem der vorstehenden Ansprüche, wobei durch die jeweilige Gaszusammensetzung des Prozessgases eine Kriechfestigkeit, eine Härte, eine Steifigkeit, eine thermische Leitfähigkeit, eine elektrische Leitfähigkeit, ein Schmelzpunkt, eine Korrosionsbeständigkeit, eine Abnutzungsbeständigkeit, eine Verschleißbeständigkeit, eine Duktilität, elektromagnetische Eigenschaften und/oder eine Porosität als metallurgische Eigenschaften der jeweiligen metallurgischen Schichten des Werkstücks beeinflusst werden.

9. Verfahren nach einem der vorstehenden Ansprüche, wobei jeweils niedrig schmelzendes Metall mit einem Schmelzpunkt von maximal 1500 °C, insbesondere von maximal 1200 °C, weiter insbesondere von maximal 1000 °C, als metallischer Werkstoff verwendet wird.

10. Verfahren nach einem der vorstehenden Ansprüche, wobei für unterschiedliche metallurgische Schicht unterschiedlicher metallischer Werkstoff pulverförmig bereitgestellt wird.

11. Verfahren nach Anspruch 10, wobei die Gaszusammensetzung des Prozessgases in Abhängigkeit des metallischen Werkstoffs der jeweiligen metallurgischen Schicht jeweils derart gewählt wird, dass durch die Gaszusammensetzung die metallurgischen Eigenschaften der jeweiligen metallurgischen Schicht beeinflusst werden.
